# EUROPEAN PATENT APPLICATION

(11) **EP 1 574 743 A1**
(43) Date of publication of application: **14.09.2005**
(21) Application number: 05005018.6
(22) Date of filing: 08.03.2005
(51) Int. Cl.: F16F 13/10

(54) **Fluid-filled vibration control apparatus**

(30) Priority: 11.03.2004 JP 2004069367
(71) Applicant: TOKAI RUBBER INDUSTRIES, LTD., Aichi-ken, 485-8550 (JP)
(72) Inventor: Umemura, Satoshi, Komaki-shi Aichi-ken, 485-8550 (JP); Tsutsumida, Jyoji, Komaki-shi Aichi-ken, 485-8550 (JP)
(74) Representative: TBK-Patent

(57) **Abstract**

A fluid-filled vibration control apparatus (10) including two mounting members (12, 14); an elastic body (16) connecting the two mounting members; a partition means (50) supported by one of the two mounting members; and a flexible membrane (46) which partially defines, on one side of the partition means that is opposite to the other side thereof on which a main fluid chamber (52) is located, an auxiliary fluid chamber. The partition means includes a main member (80) having a groove (88, 90) in a first surface thereof, and a cover member (82) having a second surface which is superposed on the first surface of the main member so as to cover the groove and thereby define an orifice passage (55, 56) permitting flows of a non-compressible fluid between the main and auxiliary fluid chambers. Each of the main and cover members is formed of a rigid material. Two portions of a ridge (100) are respectively provided on two portions as one of (a) two first portions of the first surface of the main member that are respectively located on opposite sides of the groove and (b) two second portions of the second surface of the cover member that are respectively superposed on the two first portions of the first surface, and a sealing layer (106) is provided on the other of (a) the two first portions and (b) the two second portions. The main and cover members are superposed on each other such that the two portions of the ridge project into the sealing layer and thereby fluid-tightly seal an interface of the first and second surfaces of the main and cover members.

## Description

### BACKGROUND OF THE INVENTION

### Field of the Invention

The present invention relates to a fluid-filled vibration control apparatus which exhibits a vibration control effect based on flows of a fluid with which the apparatus is filled. In particular, the present invention relates to such a fluid-filled vibration control apparatus which is preferably used as an engine mount, a body mount, or a differential mount for an automotive vehicle.

### Discussion of Related Art

As one type of a vibration control apparatus, such as an engine mount for use on an automotive vehicle, which is interposed between two members to be connected to each other in a vibration control manner, there is known a fluid-filled vibration control apparatus as disclosed by Patent Document 1 (Japanese Patent Application Publication No. 11 (1999)-264436), wherein a first and a second mounting member are located apart from each other and are connected to each other by an elastic rubber body. The elastic rubber body partially defines a main fluid chamber filled with a non-compressible fluid. The vibration control apparatus further includes a partition means which is supported by the second mounting member, and a flexible membrane which partially defines, on one side of the partition means that is opposite to the other side thereof on which the main fluid chamber is located, an auxiliary fluid chamber filled with the non-compressible fluid. The partition means has an orifice passage which communicates with the main fluid chamber and the auxiliary fluid chamber and thereby permits flows of the non-compressible fluid between the main and auxiliary fluid chambers.

The above-indicated vibration control apparatus preferably employs such a construction that the partition means which separates the main and auxiliary fluid chambers from each other includes (a) a main member having a groove which opens and extends in a first surface of the main member that is located on the side of one of the main and auxiliary fluid chambers and (b) a cover member having a second surface which is superposed on the first surface of the main member so as to cover the groove and thereby define the orifice passage.

In the fluid-filled vibration control apparatus constructed as described above, the orifice passage can be easily configured to be considerably long. Based on the resonance of the fluid flowing through the long orifice passage, the vibration control apparatus can exhibit such an excellent vibration control effect that cannot be obtained based on the elastic rubber body only.

Meanwhile, in a conventional fluid-filled vibration control apparatus employing a partition means including a main member and a cover member, as disclosed by Patent Document 2 (Japanese Patent Application Publication No. 2000-249184), generally, each of the main member and the cover member is formed of a highly rigid material, such as a metal or a hard synthetic resin, that is not deformed by flows of a non-compressible fluid that are caused in an orifice passage upon application of vibration to the vibration control apparatus. The main member and the cover member are superposed on each other, and respective outer peripheral portions of the two members are supported by a second mounting member such that those outer peripheral portions are held in pressed contact with each other.

In the case where the partition means is supported in the above-indicated manner, only the respective outer peripheral portions of the main member and the cover member are held in pressed contact with each other. Therefore, respective inner portions of the main member and the cover member may not be kept in close contact with each other, and accordingly may suffer an insufficient degree of sealing (i.e., liquid tightness) with respect to the interface of those inner portions.

In order to solve the problem of lowering of the degree of sealing with respect to the inner portion of the partition means, it is easily conceivable to interpose a sealing rubber layer between the mutually facing surfaces of the main and cover members of the partition means. However, this sealing structure may not provide a stable sealing if accuracy of dimensions and/or flatness of each of the mutually facing surfaces of the main and cover members is low or variable.

More specifically described, if the accuracy of dimensions and/or flatness of the mutually facing surfaces of the main and cover members is low or is not stable, then the accuracy with which (a) two first portions of the first surface of the main member that are respectively located on opposite sides of the groove (i.e., the orifice passage) in a widthwise direction thereof and (b) two second portions of the second surface of the cover member that are respectively opposed to the two first portions of the first surface are superposed on each other, is inevitably variable. Therefore, the force with which the sealing rubber layer is pressed by the two first portions and the two second portions is variable, and accordingly the respective degrees of sealing of the two pairs of first and second portions located on the opposite sides of the groove in the widthwise direction thereof are inevitably variable from each other. The problem of variance of the degree of sealing is amplified particularly in the case where the groove or the orifice passage is configured to exhibit a great resistance to the flows of the non-compressible fluid therethrough. Thus, this problem adversely affects the vibration control characteristic of the vibration control apparatus with respect to the low-frequency large-amplitude vibration such as engine shake.

### SUMMARY OF THE INVENTION

The present invention has been developed in the above-described technical background. It is therefore an object of the present invention to provide a fluid-filled vibration control apparatus which can stably enjoy a high degree of sealing with respect to the interface of mutually facing surfaces of a main member and a cover member of a partition means and accordingly can effectively prevent the variance of the degree of sealing from adversely affecting a vibration control characteristic of the apparatus.

According to the present invention, there is provided a fluid-filled vibration control apparatus including a first mounting member and a second mounting member which are located apart from each other; an elastic rubber body which connects the first mounting member and the second mounting member and which partially defines a main fluid chamber filled with a non-compressible fluid; a partition means which is supported by the second mounting member; and a flexible membrane which partially defines, on one side of the partition means that is opposite to the other side thereof on which the main fluid chamber is located, an auxiliary fluid chamber filled with the non-compressible fluid, the partition means including (a) a main member having at least one groove which opens and extends in a first surface of the main member that is located on a side of one of the main fluid chamber and the auxiliary fluid chamber, and (b) a cover member having a second surface which is superposed on the first surface of the main member so as to cover the at least one groove and thereby define at least one orifice passage which communicates with the main fluid chamber and the auxiliary fluid chamber and thereby permits flows of the non-compressible fluid between the main and auxiliary fluid chambers, the fluid-filled vibration control apparatus being characterized in that each of the main member and the cover member of the partition means is formed of a rigid material which is not deformed by flows of the non-compressible fluid that are caused in the orifice passage upon application of vibration to the fluid-filled vibration control apparatus, that the partition means further includes a ridge including two portions which are respectively provided on two portions as one of (a) two first portions of the first surface of the main member that are respectively located on opposite sides of the groove in a widthwise direction thereof and (b) two second portions of the second surface of the cover member that are opposed to, and superposed on, the two first portions of the first surface, respectively, such that the two portions of the ridge continuously extend along the groove, that the partition means further includes a sealing rubber layer which is provided on at least the other of (a) the two first portions of the first surface of the main member and (b) the two second portions of the second surface of the cover member, and that the main member and the cover member are superposed on each other such that the two portions of the ridge project into the sealing rubber layer and thereby fluid-tightly seal an interface of the first and second surfaces of the main and cover members.

In the fluid-filled vibration control apparatus in accordance with the present invention, each of the main member and the cover member of the partition means is formed of a highly rigid material, and the main and cover members are assembled with each other by being superposed on each other such that the two portions of the ridge that are respectively provided on the two portions as one of (a) the two first portions of the first surface of the main member that are respectively located on the opposite sides of the groove in the widthwise direction thereof and (b) the two second portions of the second surface of the cover member that are respectively opposed to the two first portions of the first surface, project into the sealing rubber layer provided on the other of (a) the two first portions of the first surface and (b) the two second portions of the second surface. Thus, the partition means is arranged such that the interface of the first and second surfaces of the main and cover members is fluid-tightly sealed by the cooperation of the sealing rubber layer and the ridge. Therefore, as compared with the case where only the sealing rubber layer is interposed between the first and second surfaces of the main and cover members of the partition means, so as to seal the interface of the first and second surfaces, the sealing rubber layer can be pressed with a greater force by, and between, (a) the two first portions of the first surface of the main member and (b) the two second portions of the second surface of the cover member, because the two portions of the ridge project into the sealing rubber layer.

Therefore, in the present fluid-filled vibration control apparatus, even if accuracy of dimensions and/or flatness of each of the first and second surfaces of the main and cover members of the partition means may be low, or not stable, and accordingly accuracy of superposing of (a) the two first portions of the first surface of the main member that are respectively located on the opposite sides of the groove and (b) the two second portions of the second surface of the cover member that are respectively opposed to the two first portions of the first surface may be more or less variable, the force with which the sealing rubber layer is pressed by, and between, (a) the two first portions of the first surface of the main member and (b) the two second portions of the second surface of the cover member can be advantageously prevented from lowering to such an extent that the fluid-tight sealing of the interface of the first and second surfaces may be damaged. Thus, the respective degrees of sealing of the two pairs of first and second portions located on the opposite sides of the groove (i.e., the orifice passage) in the widthwise direction thereof can be effectively prevented from varying from each other.

Thus, the present fluid-filled vibration control apparatus can stably enjoy a high degree of sealing with respect to the interface of the first and second surfaces of the main and cover members of the partition means. Accordingly, the present apparatus can stably enjoy a sufficiently great loss factor based on the flows of the fluid in the orifice passage upon application of a low-frequency and large-amplitude vibration, such as engine shake, to the apparatus. Consequently the present apparatus can effectively and stably enjoy the desired vibration control characteristic (or performance).

According to a preferred feature of the present invention, the main member of the partition means has, in the first surface thereof, a plurality of grooves which are located adjacent to each other in a widthwise direction thereof, and the second surface of the cover member is superposed on the first surface of the main member so as to cover the plurality of grooves and thereby define a plurality of orifice passages which are located adjacent to each other in a widthwise direction thereof.

In this fluid-filled vibration control apparatus, the leakage of the fluid between the plurality of orifice passages located adjacent to each other can be effectively prevented. Therefore, the present vibration control apparatus can more reliably and stably enjoy the desired vibration control characteristic based on the resonance of the fluid flowing in the orifice passages located adjacent to each other.

According to another preferred feature of the present invention, the two portions of the ridge are respectively provided on the two portions as the one of (a) the two first portions of the first surface of the main member that are respectively located on the opposite sides of the groove and do not include an outer peripheral portion of the first surface and (b) the two second portions of the second surface of the cover member that are respectively opposed to the two first portions of the first surface and do not include an outer peripheral portion of the second surface, the sealing rubber layer is provided on at least the other of (a) the two first portions of the first surface of the main member that do not include the outer peripheral portion of the first surface and (b) the two second portions of the second surface of the cover member that do not include the outer peripheral portion of the second surface, and the main member and the cover member of the partition means are supported by the second mounting member, such that the respective outer peripheral portions of the first and second surfaces of the main and cover members are held in pressed direct contact with each other.

In this fluid-filled vibration control apparatus, the partition means is supported by the second mounting member such that the respective outer peripheral portions of the first and second surfaces of the main and cover members each of which is formed of the rigid material are held in pressed direct contact with each other, i.e., without any portions of the sealing rubber layer being interposed between those outer peripheral portions. Therefore, in the state in which the partition means is supported by the second mounting member, the main member and the cover member can be reliably prevented from being displaced relative to each other in a direction perpendicular to the direction of superposing of the two members. Thus, the partition means can be stably supported by the second mounting member. Therefore, the present vibration control apparatus can more stably exhibit the vibration control effect based on the resonance of the fluid flowing through the orifice passage defined by the main and over members of the partition means.

### BRIEF DESCRIPTION OF THE DRAWINGS

The above and other objects, features, advantages and technical and industrial significance of the present invention will be better understood by reading the following detailed description of presently preferred embodiments of the invention, when considered in connection with the accompanying drawings, in which:
Fig. 1 is a longitudinal cross-section view of a fluid-filled vibration control apparatus to which the present invention is applied;
Fig. 2 is a plan view of an upper surface of a main body as a first part of a partition unit employed by the fluid-filled vibration control apparatus shown in Fig. 1;
Fig. 3 is an enlarged cross-section view of the main body, taken along 3 - 3 in Fig. 2;
Fig. 4 is an enlarged view of a portion of the main body shown in Fig. 3;
Fig. 5 is a plan view of an upper surface of a cover body as a second part of the partition unit employed by the fluid-filled vibration control apparatus shown in Fig. 1;
Fig. 6 is a cross-section view of the cover body, taken along 6 - 6 in Fig. 5;
Fig. 7 is a view of a lower surface of the cover body shown in Fig. 5;
Fig. 8 is a plan view of an upper surface of the partition unit employed by the fluid-filled vibration control apparatus shown in Fig. 1;
Fig. 9 is a cross-section view of the partition unit, taken along 9 - 9 in Fig. 8; and
Fig. 10 is an enlarged view of a portion of the partition unit shown in Fig. 9.

### DETAILED DESCRIPTION OF THE PREFERRED EMBODIMENTS

Hereinafter, there will be described in detail a fluid-filled vibration control apparatus to which the present invention is applied, by reference to the drawings.

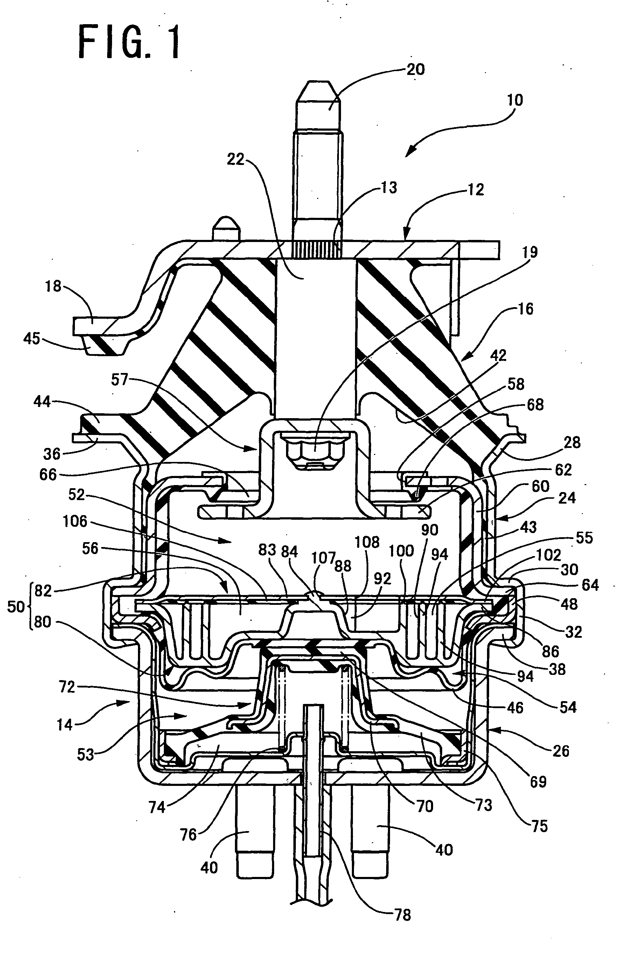

Fig. 1 shows a longitudinal cross section of an engine mount 10 for use in an automotive vehicle. The engine mount 10 is an embodiment of the fluid-filled vibration control apparatus in accordance with the present invention. As shown in Fig. 1, the engine mount 10 includes a first mounting member 12 and a second mounting member 14 each of which is formed of metal and which are located apart from each other in a vertical direction in Fig. 1, i.e., a load-receiving direction in which a vibrational load is primarily received by the engine mount 10. The first and second mounting members 12, 14 are elastically connected to each other by an elastic body 16 which is formed of rubber and which is interposed between respective surfaces of the two mounting members 12, 14 that are opposed to each other in the load-receiving direction. The first mounting member 12 is attached to a power unit, not shown, of the automotive vehicle, and the second mounting member 14 is attached to a body, not shown, of the vehicle. Thus, the engine mount 10 mounts the power unit on the vehicle's body, such that the engine mount 10 controls the vibration of the power unit. In the following description, the vertical direction means the above-indicated load-receiving direction of the engine mount 10.

More specifically described, the first mounting member 12 has a generally disc-like shape, and includes, as an integral portion thereof, a stopper projection 18 which projects radially outward from a portion of an outer peripheral portion of the disc-like shape, while being bent in a direction toward the second mounting member 14, and includes a horizontal end portion. The first mounting member 12 has, in a central portion thereof, a through-hole 13, and a rod member 22 which has, in two axially opposite end portions thereof, a support bolt 19 and an attaching bolt 20, respectively, is fixed to the central portion of the first mounting member 12 such that the attaching bolt 20 extends through the through-hole 13 so as to project upward from the central portion of the first mounting member 12. Owing to the attaching bolt 20, the first mounting member 12 is attached to the power unit of the automotive vehicle.

Meanwhile, the second mounting member 14 is constituted by a top sleeve 24 which has a large diameter and a generally cylindrical shape, and a bottom cup 26 which also has a large diameter and a generally cylindrical shape, and includes a bottom wall. The top sleeve 24 includes, in an axially upper end portion thereof, a tapered portion 28 whose diameter increases in an axially upward direction, and additionally includes, in an axially lower end portion thereof, a shoulder portion 30 which extends radially outward from an axially intermediate portion of the top sleeve 24. The top sleeve 24 additionally includes a caulking portion 32 which extends in an axially downward direction from an outer peripheral portion of the shoulder portion 30, and has a large-diameter cylindrical shape. The tapered portion 28, the shoulder portion 30, and the caulking portion 32 are each an integral portion of the top sleeve 24. Moreover, the top sleeve 24 includes an abutting projection 36 which projects radially outward from a portion of an upper end portion of the tapered portion 28 that defines an upper opening of the top sleeve 24. The abutting projection 36 is also an integral portion of the top sleeve 24. Meanwhile, the bottom cup 26 includes, as an integral portion thereof, a flange portion 38 which extends radially outward from an upper end portion of the bottom cup 26 that defines an upper opening thereof.

The flange portion 38 of the bottom cup 26 fits in an lower opening of the caulking portion 32 of the top sleeve 24, and the caulking portion 32 is caulked to the flange portion 38 so as to fix the top sleeve 24 and the bottom cup 26 to each other. Thus, the second mounting member 14 as a whole has a generally cylindrical shape with a deep bottom. Two attaching bolts 40, 40 are fixed to the bottom wall of the bottom cup 26, such that the two attaching bolts 40 project in a downward direction. Owing to the two attaching bolts 40, 40, the second mounting member 14 is attached to the body of the automotive vehicle.

Thus, the second mounting member 14 opens in the axially upward direction thereof, and the first mounting member 12 is located substantially coaxially with the second mounting member 14 such that the first member 12 is apart from the upper opening of the second member 14 and the stopper projection 18 of the first member 12 is opposed to the abutting projection 36 of the second member 14 (or the top sleeve 24) in the vertical direction. In this state, the first and second mounting members 12, 14 are elastically connected by the elastic rubber body 16 provided therebetween.

The elastic rubber body 16 which connects the first and second mounting members 12, 14 has a generally frustoconical shape, and is fixed, by vulcanization, to the first mounting member 12 and the rod member 22, such that the first member 12 is connected to, and the rod member 22 is embedded in, a small-diameter end portion of the elastic body 16. In addition, the elastic rubber body 16 is vulcanized, at an outer circumferential surface of a large-diameter end portion thereof, to an inner circumferential surface of the tapered portion 28 of the top sleeve 24 as part of the second mounting member 14. Thus, in the present embodiment, an integral intermediate product wherein the elastic rubber body 16 is vulcanized to the first mounting member 12, the rod member 22, and the top sleeve 24, and the axially upper opening of the top sleeve 24 is fluid-tightly sealed by the elastic rubber body 16, is obtained and used.

In the above-indicated integral intermediate product, the elastic rubber body 16 has, in the large-diameter end portion thereof, a large-diameter void 42 which opens in the top sleeve 24. An inner circumferential surface of the axially intermediate portion of the top sleeve 24 is substantially entirely covered by a thin rubber layer 43 which is formed integrally with the elastic rubber body 16. In addition, an upper surface of the abutting projection 36 of the top sleeve 24 (or the second mounting member 14) is covered by a cushion rubber 44, and a lower surface of the stopper projection 18 of the first mounting member 12 that faces the abutting projection 36 is covered by a cushion rubber 45. When the first and second mounting members 12, 14 are largely displaced relative to each other in a direction toward each other upon application of a vibrational load to the engine mount 10, the stopper projection 18 and the abutting projection 36 abut on each other via the respective cushion rubbers 44, 45, so that an amount of the relative displacement of the two members 12, 14 in the direction toward each other, and accordingly an amount of the elastic deformation of the rubber body 16 is limited. Thus, the stopper projection 18 and the abutting projection 36 cooperate with each other to function as a stopper.

The axially lower opening of the top sleeve 24 of the above-indicated integral intermediate product is closed by a diaphragm 46 as a flexible membrane that faces an inner surface of the elastic body 16 that defines the large-diameter void 42. The diaphragm 46 is constituted by a thin disc-like rubber membrane, and is fixedly supported by the second mounting member 14 such that an outer peripheral portion of the diaphragm 46 is sandwiched by the flange portion 38 of the bottom cup 26 and the shoulder and caulking portions 30, 32 of the top sleeve 24. Thus, the axially lower opening of the top sleeve 24 is liquid-tightly closed by the diaphragm 46. In Fig. 1, reference numeral 48 designates an annular reinforcing member which is formed of metal and is fixed, by vulcanization, to the outer peripheral portion of the diaphragm 46.

Thus, the top sleeve 24 cooperates with mutually facing surfaces of the elastic rubber body 16 and the diaphragm 46, to define, in an inner space thereof, a fluid chamber which is fluid-tightly sealed and isolated from an outside space and is filled with an appropriate non-compressible fluid such as water, alkylene glycol, polyalkylene glycol, or silicone oil. It is preferred that a viscosity of the non-compressible fluid be not higher than 0.1 Pa·s for the purpose of improving a vibration control effect of the engine mount 10 that is exhibited based on resonance of the fluid, as will be described later.

A partition unit 50 as a partition means is provided in the inner space of the top sleeve 24, such that the partition unit 50 divides the inner space, i.e., the above-indicated fluid chamber into an upper and a lower fluid chamber. The partition unit 50 has a generally disc-like configuration, and is fixedly supported by the second mounting member 14 such that an outer peripheral portion of the partition unit 50 is sandwiched, together with the outer peripheral portion of the diaphragm 46, by the flange portion 38 of the bottom cup 26 and the shoulder and caulking portions 30, 32 of the top sleeve 24. Thus, the above-indicated upper fluid chamber provides a pressure-receiving chamber 52 as a main fluid chamber that is partially defined by the elastic rubber body 16 and receives changes of pressure of the non-compressible fluid that are caused by elastic deformation of the rubber body 16 upon application of the vibrational load to the engine mount 10; and the above-indicated lower fluid chamber provides an equilibrium chamber 54 as an auxiliary fluid chamber that is partially defined by the diaphragm 46 and whose volume is easily changeable because of deformation of the diaphragm 46. This deformation of the diaphragm 46 is permitted by an air chamber 53 which is provided on an opposite side of the diaphragm 46 that is opposite to the equilibrium chamber 54 and is defined by the cooperation of the diaphragm 46 and the bottom cup 26.

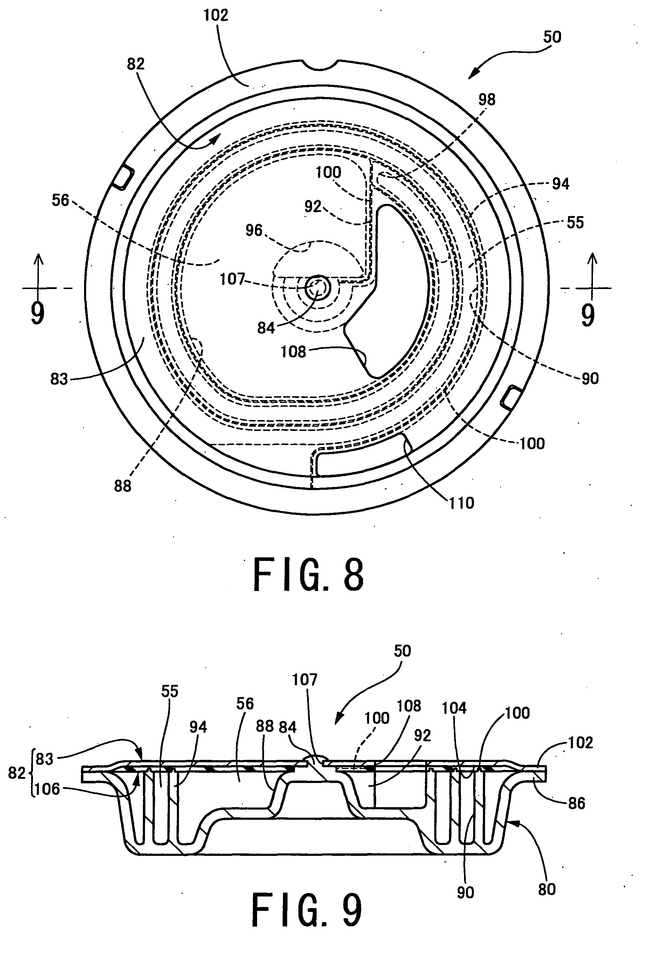

The partition unit 50 which separates the pressure-receiving chamber 52 and the equilibrium chamber 54 from each other has two first communication holes 96, 98 (Fig. 8) each of which communicates with the equilibrium chamber 54, and two second communication holes 108, 110 each of which communicates with the pressure-receiving chamber 52, and thereby defines a first and a second orifice passage 55, 56 each one of which permits flows of the non-compressible fluid between the two chambers 52, 54, substantially independent of the other orifice passage.

More specifically described, a length L and a cross-section area A of the first orifice passage 55 are so tuned that the first orifice passage 55 can exhibit, based on the resonance of the fluid flowing therethrough, a vibration control effect (i.e., a vibration damping effect) against a low-frequency vibration such as engine shake; and a length L and a cross-section area A of the second orifice passage 56 are so tuned that the second orifice passage 56 can exhibit, based on the resonance of the fluid flowing therethrough, a different vibration control effect (i.e., a vibration isolating effect) against an intermediate-frequency vibration such as engine idling vibration, because a ratio A/L of the cross-section area A to the length L of the second orifice passage 56 is greater than that of the first orifice passage 55 and accordingly a resistance of the second orifice passage 56 to the flows of the fluid is smaller than that of the first orifice passage 55.

In the pressure-receiving chamber 52 which communicates with the equilibrium chamber 54 via the two orifice passages 55, 56, there are provided a hat-shaped member 57 which is formed of metal and has a small diameter and a generally cylindrical shape with a shallow top wall, and a cylindrical member 60 which is formed of metal and has a generally cylindrical shape with a shallow top wall having, in a central portion thereof, a circular through-hole 58 whose diameter is larger than that of the cylindrical wall of the hat-shaped member 57. The hat-shaped member 57 and the cylindrical member 58 each open in a downward direction, and are each coaxial with the top sleeve 24.

The hat-shaped member 57 includes, as an integral portion thereof, a flange-like annular flat portion 62 which extends from a lower end portion of the cylindrical wall of the hat-shaped member 57, in radial directions perpendicular to an axis line of the same 57. The top wall of the hat-shaped member 57 is fastened, with the support bolt 19, to the rod member 22 fixed to the first mounting member 12, such that the lower end portion of the cylindrical wall of the hat-shaped member 57 is located inside a cylindrical wall of the cylindrical member 60, through the circular through-hole 58 thereof, and the annular flat portion 62 of the hat-shaped member 57 cooperates with a lower surface of an annular portion of the top wall of the cylindrical member 60 that defines the circular through-hole 58, to define an appropriate space therebetween. The cylindrical member 60 includes, as an integral portion thereof, a flange portion 64 which extends radially outward from a lower end portion of the cylindrical wall of the member 60. The cylindrical member 60 is fixedly supported by the second mounting member 14, such that the flange portion 64 is sandwiched, together with the respective outer peripheral portions of the diaphragm 46 and the partition unit 50, by the flange portion 38 of the bottom cup 26 and the shoulder and caulking portions 30, 32 of the top sleeve 24.

Thus, in the pressure-receiving chamber 52, an inner circumferential surface of the circular through-hole 58 of the cylindrical member 60 cooperate with an outer circumferential surface of the cylindrical portion of the hat-shaped member 57 to define a portion of a restricted passage 66; and the lower surface of the annular portion of the top wall of the cylindrical member 60 that defines the circular through-hole 58 cooperates with then upper surface of the annular flat portion 62 of the hat-shaped member 57 to define another portion of the restricted passage 66. Therefore, when a vibrational load is applied to the engine mount 10, the hat-shaped member 57 is displaced (i.e., vibrated) by the displacement (i.e., vibration) of the first mounting member 12 and the elastic body 16, and accordingly the fluid flows through the restricted passage 66. For example, when a high-frequency vibration such as booming noise is applied to the engine mount 10, the restricted passage 66 can exhibit, based on the flows of the fluid therethrough, a vibration control effect (i.e., a vibration isolating effect).

A thin rubber layer which is formed integrally with the diaphragm 46 is vulcanized to the inner surface of the cylindrical member 60, such that the thin rubber layer includes a stopper rubber portion 68 which covers the lower surface of the annular portion of the top wall of the cylindrical member 60 that defines the circular through-hole 58 and faces the annular flat portion 62 of the hat-shaped member 57. Therefore, when the first and second mounting members 12, 14 are largely displaced relative to each other in a direction away from each other upon application of the vibrational load to the engine mount 10, the annular flat portion 62 and the stopper rubber portion 68 abut on each other so as to limit an amount of the relative displacement of the two mounting members 12, 14 in the direction away from each other and accordingly an amount of the elastic deformation of the rubber body 16.

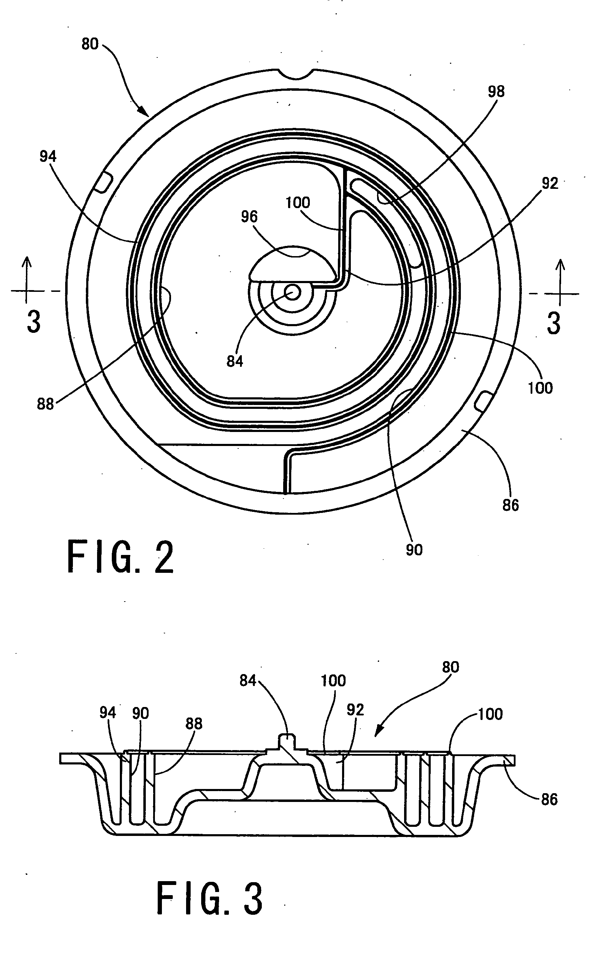

Meanwhile, in the air chamber 53 which is provided, in the bottom cup 26, on the opposite side of the diaphragm 46 that is opposite to the equilibrium chamber 54, there is provided a pressing rubber 72 which has a generally cylindrical shape with a top wall 69 and in which a reinforcing member 70 is embedded. The reinforcing member 70 is formed of metal, and has a generally cylindrical shape with a top thick wall so as to correspond to the shape of the pressing rubber 72. The pressing rubber 72 opens in a downward direction, and includes, as an integral portion thereof, an annular attaching portion 73 which extends radially outward from a lower end portion of the cylindrical portion of the pressing rubber 72. A ring member 75 which is formed of metal is fixed, by press-fitting, to an inner surface of a bottom portion of the bottom cup 26. An outer peripheral portion of the attaching portion 73 of the pressing rubber 72 is vulcanized to the ring member 75, in a state in which an upper surface of the top wall 69 of the pressing rubber 72 is held in pressed contact with a lower surface of a central portion of the diaphragm 46 that corresponds to the communication hole 96 (Fig. 2) of the second orifice passage 56 that communicates with the equilibrium chamber 54. Thus, in the bottom cup 26, an operating chamber 74 is liquid-tightly defined by the bottom wall of the bottom cup 26 and a lower surface (i.e., an inner surface) of the pressing rubber 72.

The operating chamber 74 is filled with an appropriate working fluid (i.e., liquid) and, in this chamber 74, there is provided a coil spring 76 which biases, in an upward direction, the top wall 69 of the pressing rubber 72, so that the central portion of the diaphragm 46 that corresponds to the top wall 69 is pressed upward to close the communication hole 96 through which the second orifice passage 56 communicates with the equilibrium chamber 54. The bottom wall of the bottom cup 26 partially defining the operating chamber 74 has, in a central portion thereof, a suction pipe 78 which is connected to a vacuum source, not shown, and applies suction to the working fluid in the operating chamber 74 when the vacuum source is operated. The suction pipe 78 is fixed to the bottom wall of the bottom cup 26, such that the suction pipe 78 extends through a thickness of the bottom wall.

When the vacuum source connected to the suction pipe 78 is not operated, the coil spring 76 biases upward the top wall 69 of the pressing rubber 72 so that the central portion of the diaphragm 46 closes the communication hole 96 through which the second orifice passage 56 communicates with the equilibrium chamber 54. Thus, the fluid is inhibited from flowing between the pressure-receiving chamber 52 and the equilibrium chamber 54 through the second orifice passage 56. On the other hand, when the vacuum source is operated, the working fluid is sucked out of the operating chamber 74 and accordingly the top wall 69 of the pressing rubber 72 is displaced downward against the biasing force of the coil spring 76, so that the central portion of the diaphragm 46 is moved away from the communication hole 96 through which the second orifice passage 56 communicates with the equilibrium chamber 54 and accordingly the communication hole 96 is opened. Thus, the fluid is permitted to flow between the pressure-receiving chamber 52 and the equilibrium chamber 54 through the second orifice passage 56.

That is, in the present embodiment, when the vacuum source connected to the suction pipe 78 is operated, the second orifice passage 56 is caused to communicate with the equilibrium chamber 54; and when the vacuum source is stopped, the second orifice passage 56 is shut off from the same 54. Therefore, for example, when a low-frequency vibration such as engine shake is applied to the engine mount 10, the vacuum source is stopped to shut off the second orifice passage 56, so that a sufficiently large amount of the fluid is caused to flow through the first orifice passage 55. Thus, the first orifice passage 55 advantageously exhibits a vibration damping effect based on the resonance of the fluid flowing therethrough. Meanwhile, when an intermediate-frequency vibration such as engine idling vibration is applied to the engine mount 10, the vacuum source is operated to open the second orifice passage 56. Thus, the second orifice passage 56 advantageously exhibits a sufficiently low dynamic spring constant based on the resonance of the fluid flowing therethrough. The first orifice passage 55 is kept communicated with the equilibrium chamber 54. Since, however, the ratio A/L of the cross-section area A to the length L of the first orifice passage 55 is smaller than that of the second orifice passage 56 and accordingly the resistance of the first orifice passage 55 to the flows of the fluid is greater than that of the second orifice passage 56, a sufficiently large amount of the fluid is caused to flow through the second orifice passage 56 in the state in which the second orifice passage 56 is communicated with the equilibrium chamber 54.

In the present engine mount 10 constructed as described above, the partition unit 50 is arranged to have a characteristic sealing structure which prevents leakage of the fluid from each of the first and second orifice passages 55, 56. The sealing structure technically distinguishes the present engine mount 10 from the above-described conventional engine mounts.

More specifically described, as shown in Fig. 1, the partition unit 50 includes a main body 80 as a main member, and a cover body 82 which is assembled with the main body 80 by being superposed on the same 80 in the vertical direction. As shown in Figs. 2 and 3, the main body 80 as a first part of the partition unit 50 is constituted by a metal plate having a generally disc-like shape, and has a sufficiently high rigidity that assures that the main body 80 is not deformed by the flows of the fluid in the first and second orifice passages 55, 56 formed therein. The main body 80 includes, as an integral portion thereof, a rivet pin 84 which is located in a central portion of the main body 80, and additionally includes, in an outer peripheral portion thereof, a main-body-side abutting portion 86 which has a flange-like shape with an upper annular flat surface.

The main body 80 has, in a radially inner area of a radially intermediate portion thereof located between the rivet pin 84 and the abutting portion 86, an inner wide groove 88 which extends over about one full turn around the rivet pin 84 and opens in an upper surface of the main body 80, and additionally has, in a radially outer area of the intermediate portion thereof, an outer narrow swirl groove 90 which extends over about two and half turns along the abutting portion 86 and opens in the upper surface of the main body 80. The outer swirl groove 90 is longer and narrower than the inner groove 88. Moreover, the main body 80 includes, as an integral portion thereof, a thin partition wall 92 which is formed between one end portion of the inner groove 88 and one end portion of the outer groove 90, such that the partition wall 92 extends in a generally radial direction of the main body 80. Thus, the inner groove 88 and the outer groove 90 are separated from each other by the partition wall 92, and accordingly do not communicate with each other.

More specifically described, the radially intermediate portion of the main body 80 that is located between the rivet pin 84 and the abutting portion 86 is recessed by an appropriate depth, and the main body 80 additionally includes, as an integral portion thereof, a thin swirl wall 94 which extends upward from an upper surface of a radially outer area of the recessed intermediate portion so as to have an appropriate height, and extends over about two and half turns while starting with the abutting portion 86 and ending with the partition wall 92. Thus, the outer swirl groove 90 is provided along the swirl wall 94 such that a portion of the outer swirl groove 90 is defined by two portions of the swirl wall 94 that are located adjacent to each other in the radial direction of the main body 80, and the outer swirl groove 90 is separated from the inner groove 88 by the partition wall 92. Meanwhile, the inner groove 88 is surrounded by a radially innermost portion of the swirl wall 94, and is partially defined by the partition wall 92 extending in the generally radial direction of the main body 80. Thus, the main body 80 has the wide and short inner groove 88 and the narrow and long outer groove 90, such that the two grooves 88, 90 are located adjacent to each other in a widthwise direction of the grooves 88, 90, i.e., in the radial direction of the main body 80, and such that the first and second turns of the outer swirl groove 90 are located adjacent to each other in a widthwise direction of those turns, i.e., in the radial direction of the main body 80, and the remaining half portion of the outer swirl groove 90 is located adjacent to the respective corresponding half portions of the first and second turns of the same 90 in the radial direction.

The inner groove 88 opens, at a terminal end thereof in a direction of extension thereof, in a lower surface of the main body 80, through a semicircular inner communication hole 96 which is formed at a position radially adjacent to the rivet pin 84 located in the central portion of the main body 80. Likewise, the outer swirl groove 90 opens, at a terminal end thereof in a direction of extension thereof, in the lower surface of the main body 80, through an elongate outer communication hole 98 which is formed at a position adjacent to the partition wall 92 in a circumferential direction of the main body 80.

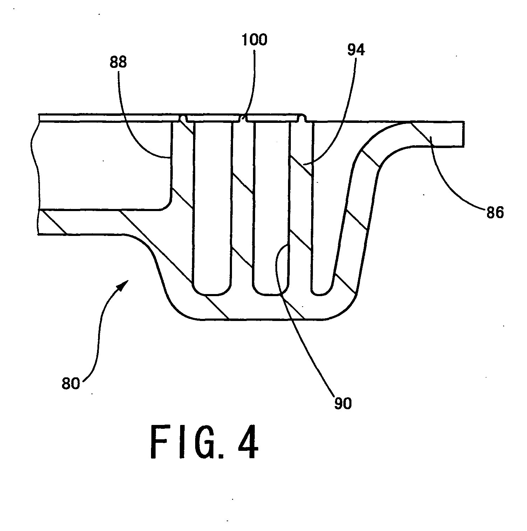

In the present embodiment, the main body 80 includes, as an integral portion thereof, a ridge 100 which is provided on (a) an upper surface of the swirl wall 94 that extends upward in the intermediate portion of the main body 80 between the rivet pin 84 and the abutting portion 86 and partially defines the inner and outer grooves 88, 90, and (b) an upper surface of the partition wall 92 that separates the inner and outer grooves 88, 90 from each other. As shown in Figs. 2 and 4, the ridge 100 has an inverted-U-shaped cross section, and projects upward from a widthwise middle portion of the upper surface of each of the swirl wall 94 and the partition wall 92, such that a top end of the ridge 100 is higher by a predetermined length or height than the abutting portion 86 and such that a portion of the ridge 100 continuously extends on the upper surface of the swirl wall 94 and another portion of the ridge 100 continuously extends on the upper surface of the partition wall 92. That is, the ridge 100 is integrally formed with the swirl wall 94 and the partition wall 94 of the main body 80, such that the ridge 100 continuously extends, on the upper surface of the main body 80 where the inner and outer grooves 88, 90 are formed, along the two grooves 88, 90 and on either side of each of the two grooves 88, 90 in the widthwise direction of the grooves 88, 90. Though the abutting portion 86 is located on an outer side of a radially outermost portion of the outer swirl groove 90, the ridge 100 is not provided on the upper surface of the abutting portion 86.

Meanwhile, as shown in Figs. 1, 5, and 6, the cover body 82 includes a thin metal plate 83 as a cover member that has a disc-like shape having a substantially same diameter as that of the main body 80 and has a sufficiently high rigidity that assures that the cover body 82 is not deformed by the flows of the fluid in the first and second orifice passages 55, 56 formed in the main body 80. The metal plate 83 includes, in an outer peripheral portion thereof, a cover-body-side abutting portion 102 which has a flange-like shape having a width corresponding to that of the main-body-side abutting portion 86 provided in the outer peripheral portion of the main body 80 and has a lower annular flat surface.

The metal plate 83 as part of the cover body 82 includes, in an inner portion thereof other than the outer peripheral portion thereof providing the cover-body-side abutting portion 102, a recessed portion 104 which is shallow and opens downward. An inner space of the shallow recessed portion 104 is filled with a sealing rubber layer 106 which has a thickness substantially equal to a depth of the recessed portion 104 and is adhered, by vulcanization, to a lower surface of the same 104. Thus, the cover body 82 is obtained as an integral intermediate product wherein the sealing rubber layer 106 is adhered, by vulcanization, to the lower surface of the disc-like metal plate 83.

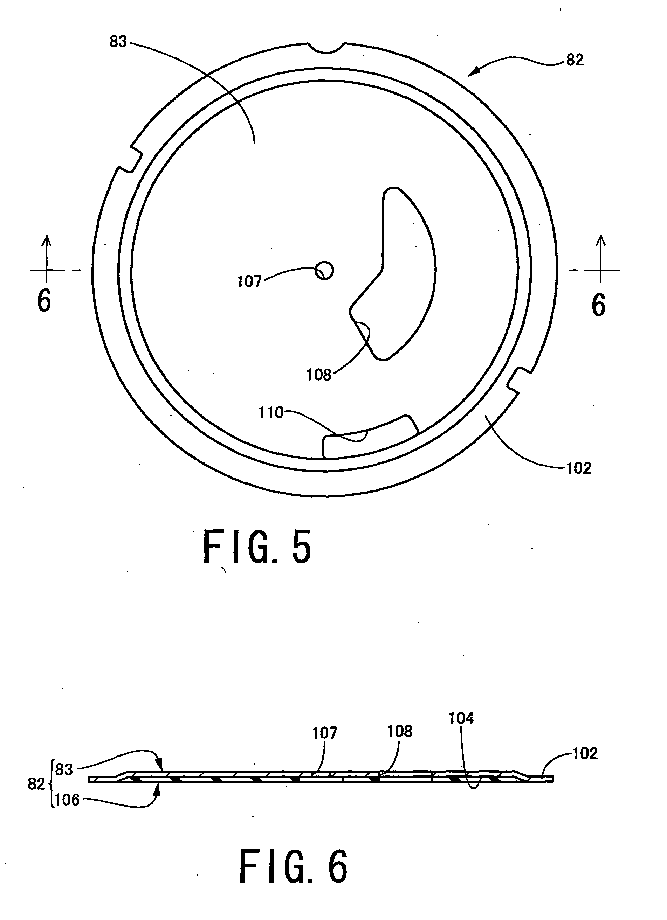

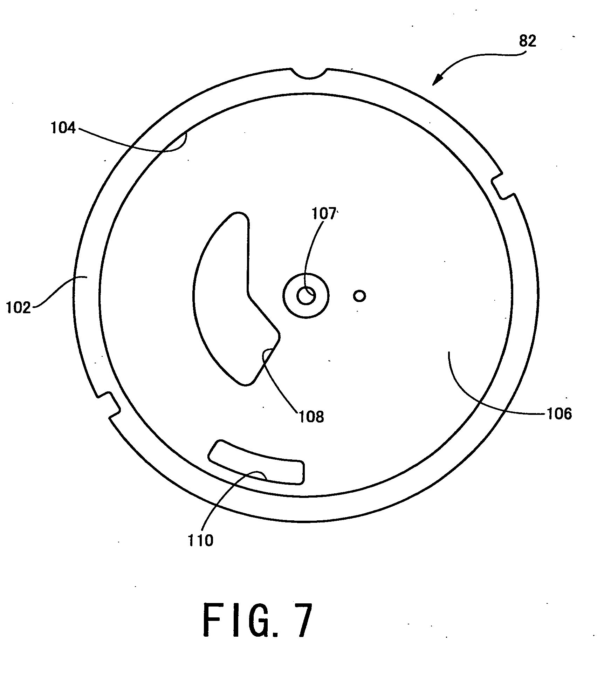

As shown in Figs. 5 and 7, the cover body 82 as the integral intermediate product has, in a central portion thereof, a pin-receiving hole 107 in which the rivet pin 84 of the main body 80 is insertable. In addition, the cover body 82 has an inner communication hole 108 at a position radially outwardly remote by an appropriate distance from the pin-receiving hole 107, and an outer communication hole 110 at a position radially inwardly adjacent to the cover-body-side abutting portion 102, such that each of the two communication holes 108, 110 is formed through a thickness of the cover body 82 so as to connect between the upper and lower surfaces of the same 82.

In the present embodiment, as shown in Figs. 8 and 9, the cover body 82 constructed as described above is superposed on the main body 80 such that the rivet pin 84 of the main body 80 is inserted in the pin-receiving hole 107 of the cover body 82 and the cover body 82 covers the inner and outer grooves 88, 90 of the main body 80 while the lower surface of the cover-body-side abutting portion 102 is superposed on the upper surface of the main-body-side abutting portion 86, directly, i.e., without any portions of the sealing rubber layer 106 being interposed therebetween. Then, a top portion of the rivet pin 84, inserted in the pin-receiving hole 107 of the cover body 82, is crushed, and thus the cover body 82 and the main body 80 are assembled with each other to provide the partition unit 50 as an assembly. In the thus assembled partition unit 50, the inner and outer communication holes 108, 110 of the cover body 82 are located at respective positions aligned with the respective initial end portions of the inner and outer grooves 88, 90 of the main body 80.

In the partition unit 50 constructed as described above, the outer swirl groove 90 of the main body 80, covered by the cover body 82, defines the first orifice passage 55 having the smaller ratio A/L of the cross-section area A to the length L and the greater resistance to the flows of the fluid; and the inner groove 88 of the main body 80, covered by the cover body 82, defines the second orifice passage 56 having the greater ratio A/L of the cross-section area A to the length L and the smaller resistance to the flows of the fluid.

The partition unit 50 as the assembly in which the cover body 82 and the main body 80 are assembled with each other and the first and second orifice passages 55, 56 are defined, is accommodated and supported, as shown in Fig. 1, by the second mounting member 14, such that the cover-body-side abutting portion 102 and the main-body-side abutting portion 86, held in abutting contact with each other, are sandwiched by the shoulder portion 30 of the top sleeve 24 and the flange portion 38 of the bottom cup 26, and then the caulking portion 32 of the top sleeve 24 is caulked to the flange portion 38 of the bottom cup 26 so as to hold the two abutting portions 102, 86 in pressed contact with each other.

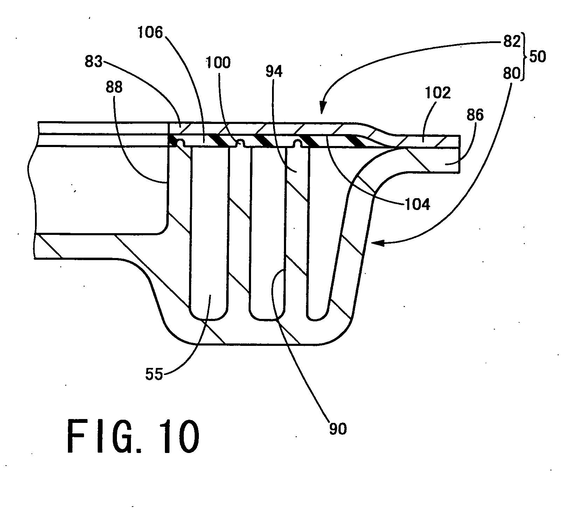

In the state in which the partition unit 50 is supported by the second mounting member 14, the ridge 100 that is integrally formed on the upper surface of each of the swirl wall 94 and the partition wall 92 defining the inner and outer grooves 88, 90 in the main body 80, projects, as shown in Fig. 10, into the sealing rubber layer 106 that is adhered, by vulcanization, to the lower surface of the metal plate 83 as the cover member. Thus, an interface of the lower surface of the metal plate 83 and the upper surface of the main body 80 is fluid-tightly (i.e., liquid-tightly) sealed by the cooperation of the ridge 100 and the sealing rubber layer 106. Therefore, when the fluid flows in each of the first and second orifice passages 55, 56, the fluid can be effectively prevented from leaking from the first or second orifice passage 55, 56.

Thus, the present engine mount 10 differs from such an engine mount in which only the sealing rubber layer 106 is interposed between the mutually facing surfaces of the main body 80 and the cover body 82 so as to seal fluid-tightly the interface of the mutually facing surfaces and thereby prevent the leakage of the fluid from the first and second orifice passages 55, 56. Therefore, even if accuracy of dimensions and/or flatness, of each of the mutually facing surfaces of the main body 80 and the cover body 82 may lower, or vary, in the engine mount or mounts, 10 and accordingly accuracy of superposing of those mutually facing surfaces on each other may vary in the engine mount or mounts 10, the sealing rubber layer 106 can be sufficiently strongly sandwiched by the swirl wall 94 and the partition wall 92 defining the inner and outer grooves 88, 90 in the main body 80, and respective portions of the metal plate 83 (as part of the cover body 82) that correspond to those walls 94, 92. Thus, in the present engine mount or mounts 10, a sufficiently high fluid-tight sealing can be stably provided between the swirl wall 94 and the partition wall 92 of the main body 80, and the respective portions of the metal plate 83 that correspond to those walls 94, 92.

Therefore, the present engine mount 10 can more effectively prevent the leakage of the fluid from the first and second orifice passages 55, 56 and accordingly can more advantageously exhibit the vibration control effect based on the resonance of the fluid flowing through each of those orifice passages 55, 56. In particular, since the resonance of the fluid flowing through the first orifice passage 55 having the greater resistance to the flow of the fluid, can be still more reliably and stably exhibited, the vibration damping effect against the low-frequency vibration such as engine shake can be more advantageously exhibited.

In the present engine mount 10, the ridge 100 provided on the swirl wall 94 and the partition wall 92 defining the inner and outer grooves 88, 90 in the main body 80 projects into the sealing rubber layer 106 of the cover body 82, so as to improve the degree of fluid-tight sealing between the two bodies 80, 82. Therefore, the leakage of the fluid between the first and second orifice passages 55, 56, and the leakage of the fluid between the respective portions of the first orifice passage 55 that are located adjacent to each other in the widthwise direction of the same 55 can be effectively prevented. Thus, the two sorts of vibration control characteristics, i.e., the high vibration damping effect based on the resonance of the fluid flowing through the first orifice passage 55 and the low dynamic-spring constant based on the resonance of the fluid flowing through the second orifice passage 56 can be more advantageously obtained.

In addition, in the present embodiment, the partition unit 50 is supported by the second mounting member 14, such that the cover-body-side abutting portion 102 and the main-body-side abutting portion 86 that are superposed on, and held in direct contact with, each other without the sealing rubber layer 106 being interposed therebetween, are sandwiched by the shoulder portion 30 of the top sleeve 24 and the flange portion 38 of the bottom cup 26, and then the caulking portion 32 of the top sleeve 24 is caulked to the flange portion 38 of the bottom cup 26 so as to hold the two abutting portions 102, 86 in pressed contact with each other. Therefore, the main body 80 and the cover body 82 can be more reliably prevented from being displaced relative to each other in a horizontal direction perpendicular to the vertical direction in which the two bodies 80, 82 are superposed on each other, and accordingly the partition wall 50 can be more stably supported by the second mounting member 14. Thus, the present engine mount 10 can more stably exhibit the vibration control effect based on the resonance of the fluid flowing through each of the first and second orifice passages 55, 56 defined by the cooperation of the main body 80 and the cover body 82.

While the present invention has been described in detail in its preferred embodiment, it is to be understood that the present invention is by no means limited to the details of the described embodiment but may be otherwise embodied.

For example, though the sealing rubber layer 106 is provided on the entire lower surface of the radially inner portion of the cover body 82 (or the metal plate 83) other than the outer peripheral portion of the same 82 that provides the cover-body-side abutting portion 102, the sealing rubber layer 106 may be provided on at least a portion of the lower surface of the inner portion of the metal plate 83 that corresponds to the ridge 100 of the main body 80. That is, the rubber layer 106 may partially cover the lower surface of the radially inner portion of the metal plate 83.

Alternatively, the sealing rubber layer 106 may be provided on the upper surface of each of the swirl wall 94 and the partition wall 92 defining the inner and outer grooves 88, 90 in the main body 80. In this case, the ridge 100 is provided on the respective portions of the cover body 82 (or the metal plate 83) that are aligned with the swirl wall 94 and the partition wall 92 in the state in which the cover body 82 is assembled with the main body 80, such that a plurality of portions of the ridge 100 continuously extend along the inner and outer grooves 88, 90.

The ridge 100 may be modified to have a different shape than that illustrated in the figures.

Each of the main body 80 and the cover body 82 (or the plate 83) may be made of a different material than the metallic material described in the embodiment. For example, each of the two bodies 80, 82 may be made of a hard synthetic resin. That is, each of the two bodies 80, 82 may be made of any known material having a sufficiently high rigidity assuring that the each body 80, 82 is not deformed by the non-compressible fluid flowing in the orifice passages 55, 56 upon application of vibration to the engine mount 10.

The configuration and shape of each of the first and second orifice passages 55, 56 may be modified, as needed, while desired vibration-control characteristic and/or construction of the engine mount 10 is/are taken into account, and accordingly are by no means limited to those illustrated in the figures. One of the first and second orifice passages 55, 56 may be omitted, or a third orifice passage may be added to the two orifice passages 55, 56.

In the illustrated embodiment, the first mounting member 12 is attached to the power unit of the vehicle, and the second mounting member 14 is attached to the body of the vehicle. However, the first and second mounting members 12, 14 may be attached to the body and the power unit, respectively.

The principle of the present invention is also applicable to a bush-type vibration control apparatus including a first mounting member in the form of an axis member, a second mounting member in the form of an outer cylindrical member which is radially outwardly remote from the axis member and is concentric, or eccentric, with the axis member, and an elastic rubber body which elastically connects between radially mutually facing surfaces of the two members and defines, between the two members, a fluid chamber filled with a non-compressible fluid.

The principle of the present invention is applicable to not only engine mounts for use in automotive vehicles but also body mounts, differential mounts, suspension bushes, etc. for use in automotive vehicles and various other sorts of vibration control apparatuses for use in other products than automotive vehicles.

It is to be understood that the present invention may be embodied with other changes, modifications, and improvements that may occur to a person skilled in the art, without departing from the scope of the present invention.

A fluid-filled vibration control apparatus (10) including two mounting members (12, 14); an elastic body (16) connecting the two mounting members; a partition means (50) supported by one of the two mounting members; and a flexible membrane (46) which partially defines, on one side of the partition means that is opposite to the other side thereof on which a main fluid chamber (52) is located, an auxiliary fluid chamber. The partition means includes a main member (80) having a groove (88, 90) in a first surface thereof, and a cover member (82) having a second surface which is superposed on the first surface of the main member so as to cover the groove and thereby define an orifice passage (55, 56) permitting flows of a non-compressible fluid between the main and auxiliary fluid chambers. Each of the main and cover members is formed of a rigid material. Two portions of a ridge (100) are respectively provided on two portions as one of (a) two first portions of the first surface of the main member that are respectively located on opposite sides of the groove and (b) two second portions of the second surface of the cover member that are respectively superposed on the two first portions of the first surface, and a sealing layer (106) is provided on the other of (a) the two first portions and (b) the two second portions. The main and cover members are superposed on each other such that the two portions of the ridge project into the sealing layer and thereby fluid-tightly seal an interface of the first and second surfaces of the main and cover members.

## Claims

1. A fluid-filled vibration control apparatus (10) including
a first mounting member (12) and a second mounting member (14) which are located apart from each other;
an elastic rubber body (16) which connects the first mounting member and the second mounting member and which partially defines a main fluid chamber (52) filled with a non-compressible fluid;
a partition means (50) which is supported by the second mounting member; and
a flexible membrane (46) which partially defines, on one side of the partition means that is opposite to the other side thereof on which the main fluid chamber is located, an auxiliary fluid chamber (54) filled with the non-compressible fluid,
the partition means including (a) a main member (80) having at least one groove (88, 90) which opens and extends in a first surface of the main member that is located on a side of one of the main fluid chamber and the auxiliary fluid chamber, and (b) a cover member (83) having a second surface which is superposed on the first surface of the main member so as to cover said at least one groove and thereby define at least one orifice passage (55, 56) which communicates with the main fluid chamber and the auxiliary fluid chamber and thereby permits flows of the non-compressible fluid between the main and auxiliary fluid chambers,
the fluid-filled vibration control apparatus being
**characterized in**
**that** each of the main member and the cover member of the partition means is formed of a rigid material which is not deformed by flows of the non-compressible fluid that are caused in the orifice passage upon application of vibration to the fluid-filled vibration control apparatus,
**that** the partition means further includes a ridge (100) including two portions which are respectively provided on two portions as one of (a) two first portions of the first surface of the main member that are respectively located on opposite sides of the groove in a widthwise direction thereof and (b) two second portions of the second surface of the cover member that are opposed to, and superposed on, the two first portions of the first surface, respectively, such that the two portions of the ridge continuously extend along the groove,
**that** the partition means further includes a sealing rubber layer (106) which is provided on at least the other of (a) the two first portions of the first surface of the main member and (b) the two second portions of the second surface of the cover member, and
**that** the main member and the cover member are superposed on each other such that the two portions of the ridge project into the sealing rubber layer and thereby fluid-tightly seal an interface of the first and second surfaces of the main and cover members.

2. The fluid-filled vibration control apparatus according to claim 1, wherein the main member (80) of the partition means (50) has, in the first surface thereof, a plurality of grooves (88, 90) which are located adjacent to each other in a widthwise direction thereof, and the second surface of the cover member (82) is superposed on the first surface of the main member so as to cover the plurality of grooves and thereby define a plurality of orifice passages (55, 56) which are located adjacent to each other in a widthwise direction thereof.

3. The fluid-filled vibration control apparatus according to claim 1 or claim 2, wherein the two portions of the ridge (100) are respectively provided on the two portions as said one of (a) the two first portions of the first surface of the main member (80) that are respectively located on the opposite sides of the groove (88, 90) and do not include an outer peripheral portion of the first surface and (b) the two second portions of the second surface of the cover member (83) that are respectively superposed on the two first portions of the first surface and do not include an outer peripheral portion of the second surface, and the sealing rubber layer (106) is provided on at least the other of (a) the two first portions of the first surface of the main member that do not include the outer peripheral portion of the first surface and (b) the two second portions of the second surface of the cover member that do not include the outer peripheral portion of the second surface, and wherein the main member and the cover member of the partition means (50) are supported by the second mounting member (14), such that the respective outer peripheral portions of the first and second surfaces of the main and cover members are held in pressed direct contact with each other.
